Europäisches Patentamt

European Patent Office

Office européen des brevets

(11) Publication number: **0 334 600**
**A2**

# EUROPEAN PATENT APPLICATION

(21) Application number: **89302789.6**

(22) Date of filing: **21.03.89**

(51) Int. Cl.4: **G 06 F 15/353**

(30) Priority: **23.03.88 GB 8806879**
**23.03.88 GB 8806880**

(43) Date of publication of application:
**27.09.89 Bulletin 89/39**

(84) Designated Contracting States: **DE FR GB IT NL**

(71) Applicant: **DU PONT PIXEL SYSTEMS LIMITED**
**79 Knightsbridge**
**London SW1X 7KB (GB)**

(72) Inventor: **Trevitt, Neil Francis**
**16 Manorgate Road**
**Kingston-upon-Thames Surrey, KT2 7AL (GB)**

**Wilson, Malcolm Eric**
**16 Salwayash Drive Salwayash**
**Bridport Dorset (GB)**

**Lloyd, Sarah Jane**
**16 Manorgate Road**
**Kingston-upon-Thames Surrey, KT2 7AL (GB)**

(74) Representative: **Beresford, Keith Denis Lewis et al**
**BERESFORD & Co. 2-5 Warwick Court High Holborn**
**London WC1R 5DJ (GB)**

(54) **Interpolation method and apparatus.**

(57) In order to provide a series of quantised values Yi interpolated between two end values YO, Yn, a high significance part 412 of an output register is loaded with one end value YO, a first input register 402 is loaded with the difference Yn-YO between the end values, and a reciprocal look-up table 502 is addressed by the number n of interpolation steps, the output 1/n from the table 502 being loaded into a second input register 404. A multiplier accumulator 406, 408 repeatedly adds the product (Yn-YO).1/n to the output register 410, 412, 414, and the series of quantised values are taken from the high significance part 412 of the output registers. Such an arrangement avoids hardware or software arithmetic division operations and can also make use of the 32-bit output commonly available in a 16-bit input multiplier accumulator, without needing to employ a general purpose 32-bit accumulator which would be large and expensive.

Figure 5

EP 0 334 600 A2

**Description**

## INTERPOLATION METHOD AND APPARATUS

I. Background of the Invention

a. Field of the Invention
  This invention relates to digital computers. More specifically, this invention relates to methods of interpolation and digital differential analysis.

b. Related Art

i) The Importance of Interpolation
  In the computer field, it is often necessary to interpolate values. For example, in order to draw a line on a bit mapped display monitor it is often necessary to interpolate the desired line into a given number of pixels displayed between the start point and the end point. The line would then be drawn by illuminating the pixels that form it. In another example it is often desirable to gradually shade a displayed image over a given area. A conventional method of accomplishing this is to interpolate shading values between a starting shade and an ending shade over a given number of pixels. These examples are by no means exhaustive, and in fact merely scratch the surface of potential applications for interpolation algorithms. The general problem can be stated as: How does one gradually change an initial value (V) by an amount (DELTA V) over a given number of steps (N)?
  One conventional method for performing interpolation is the use of a digital differential analyzer (DDA). One well known example is the DDA for generating a line. A typical simple line DDA works on the principle of separating the line's X and Y components each into integer and fractional parts. The DDA then increments the X and Y components in fractional steps. When the fractional portion overflows, the integer component is incremented. The DDA uses the integer component to form its output. As used in the computer field, one of the components is consistently incremented by one, while the other component is conditionally incremented.

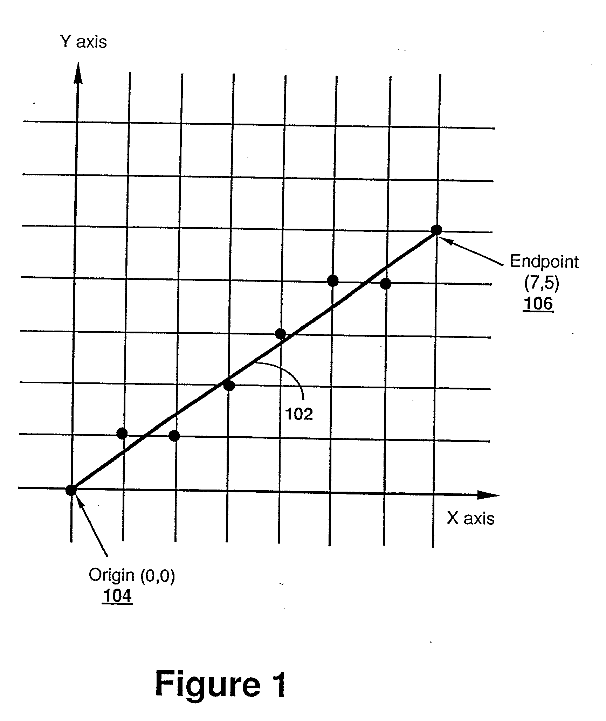

ii) The Simple DDA
  The simple DDA alglorithm may be better understood by reference to Figure 1. Assume it is desired to plot a line 102 between a start point 104 and an endpoint 106 on a display monitor. Further assume that points can only be plotted at places where the grid lines intersect (corresponding to pixels on the monitor). The initial value (V) of the line would be zero (the Y component startpoint value). The desired change (DELTA V) would be 5 (the Y component endpoint value) and the number of steps over which the value is to change (N) would be 7 (the total length of the line in the X direction). A simple BASIC language DDA such as is shown in example 1-1 could be used to perform this plot.

## EXAMPLE 1-1

## A DDA PROGRAM

```
X=0:Y=0:V=0:N=7 : DELTA V = 5
Y = V + .5
FOR I = 1 TO N
PLOT (TRUNC(X), TRUNC(Y))
Y = Y + DELTAV/N
X = X + 1
NEXT X
PLOT (TRUNC(X), TRUNC(Y))
END
```

  From the example above it will be understood that the DDA program simply initializes the Y value to the line's Y start coordinate plus a rounding factor of .5, and for N iterative cycles; plots a point at the integer component of the X and Y values; increments the Y coordinate by the slope of the line (DELTA V / N; and increments the line's X component by one. The last plot command is added in order to plot the last point of the

2

line.

A similar program to the one above could be used for Goraud shading, the difference being that shading values would be changed over a given number of steps as opposed to varying X and and Y coordinates. Also, in a shading program, the last plot command would not be necessary.

### iii) Bresenham's Algorithm

One problem with simple DDA operations such as the one described above is that they require a division operation. These are usually quite costly in terms of CPU time and conventionally have always been regarded as making the simple DDA unsuitable for hardware implementation. One popular conventional way to avoid the division is another type of interpolation method known as Bresenham's Algorithm.

The Bresenham's Algorithm method is designed in order to increment one of the coordinate values by plus or minus one in each iteration; the remaining coordinate being incremented or not incremented depending on the value of an error term (i.e. Bresenham's error term) maintained by the algorithm. The error term is used to store the distance (measured perpendicular to the axis of greatest movement) between the exact path of the theoretical perfect line and the actual pixels which are addressed and written (i.e. illuminated as dots). An example of a Bresenham's Algorithm line plotting program and other examples of DDA can be found in a book entitled Principals of Interactive Computer Graphics (second edition), by William M. Newman and Robert F. Sproull, McGraw Hill (10th printing 1984), which in its entirety, is incorporated by reference herein as if printed in full below. Bresenham's algorithm, while solving the division problem, still encounters some other problems together with many conventional DDA interpolation techniques.

### iv) The Non-Fractional Slope Problem

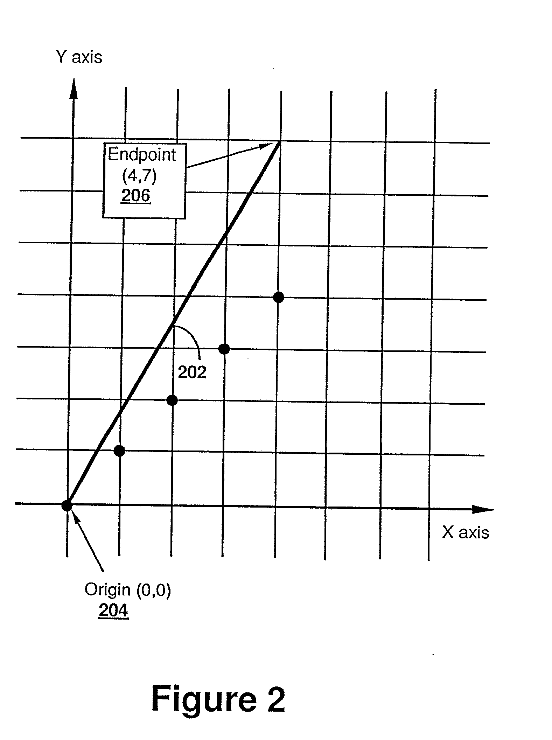

Many conventional DDA programing techniques (including Bresenham's Algorithm programs) only allow the interpolated values to be conditionally incremented by one. This problem can be understood more clearly when considering a line with a slope of greater than 45 degrees from the X axis. In these cases, N (the number of steps) will always be smaller than DELTA V (the desired change in value). The problem with this situation is shown by reference to figure 2.

Figure 2 shows a line 202 with its start point 204 at the X,Y origin, and its endpoint 206 at X, Y coordinates 4,7. In this case N is equal to 4 (i.e. 4 minus 0) and DELTA V is equal to 7 (i.e 7 minus 0). DELTA V / N will therefore be equal to 1.75. Those skilled in the art will recognize that under these circumstances, X and Y will always be incremented in Bresenham's Algorithm routines. The result will be a 45 degree plot as illustrated by the dots on figure 2. This, of course, is not the desired result.

In order to accommodate such conditions, more code must be added in order to interpolate the X values over DELTA V steps in the Y direction. In other words, the program must be modified to accommodate whichever slope direction is less than one. Depending on the angle of the line, programs typically using Bresenham's Alogorithm and other conventional DDA programs, enter one set of code or the other. The programmer or program must keep track of which section is being executed.

Unfortunately, while the solution above can be used to solve the problem of line drawing, it does not solve analogous one dimensional problems such as Gouraud shading. For example, consider the problem of interpolating, between two shades, represented by 60 and 255, over 8 pixels starting at the left hand edge of the display screen. The variable DELTA V would then be equal to 195 (255 - 60), N would be equal to 8, X would initially be equal to 1 and Y would initially be equal to 60. The result of DELTA V divided by N would be 7.5 and a Bresenham's algorithm type program would merely cause the shade value to increment by one for each pixel (i.e. 60,61,62,63,64,65,66,67). Reversing the slope in this case creates a nonsense result. This will be more readily understood when it is considered that N and X are defined in pixels while Y and delta V are defined in shading codes.

### v) Line Clipping and The Subset Line Problem

Another problem with Bresenham's algorithm and many other interpolation methods is conventionally referred to as the Subset Line Problem. Briefly, the problem is that in two dimensional raster graphics it is difficult to determine where an exact portion of a line is plotted in order to erase or retrace it. Assume that a line L1 is to be drawn on a screen between a starting pixel P1 and an ending pixel P2. Assume the output of a chosen interpolation algorithm draws the line by plotting (by illuminating in a first color for example) a group of pixels G1. If it is necessary to erase or overwrite a portion of the line it will be necessary to retrace, (illuminate in a second color for example), a subportion of the line L.

In order to accomplish this, a new line L2 must be generated by choosing a starting pixel P4 and an ending pixel P5 which are within the original group of pixels G1. Since the new line L2 is being used to erase a portion of line L1 it is important that the entire group of pixels plotted when generating line L2 (call this group G2) by a subset of G1.

The subset line problem is not a trivial one. If the conditions above are not satisfied, the line will not be completely erased and extra pixels will be plotted thereby causing artifacts of the display screen. It is accepted that the popular Bresenham's Algorithm does not satisfy the above conditions. Some suggestions for circumventing this problem have been offered by authors, one example suggests using a lookup table which has the digitization of every possible line on the screen stored within. Such suggestions have generally been considered to be unrealistic. The subset line problem is discussed in the book Data Structures for Raster Graphics, Edited by L.R.A. Kessener, F.J. Peteres and M.L.P. van Lierop, published by Springer-Verlag which in its entirety is incorporated by reference herein as if printed in full below. This book is part of the Eurographics Seminars series. Referring to the subset line problem, the book states "Although there are some preliminary results, this is still an open problem: it is not even known whether a good algorithm exists, let alone how complicated it might be." (page 7, paragraph 1)

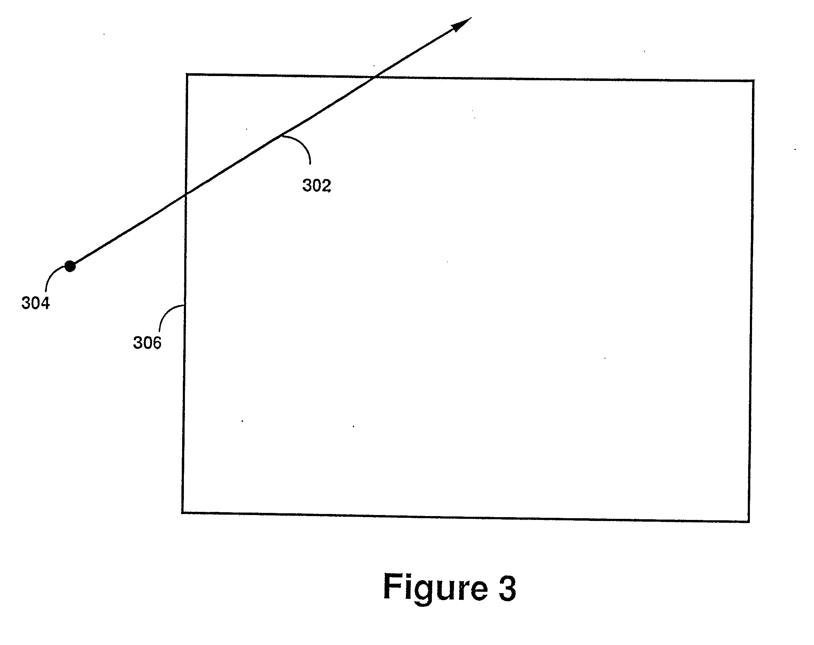

The subset line problem becomes important, particularly where it is desired to clip a line to the borders of a displayed window. The problem is illustrated by figure 3. Where a line displayed on a screen or window is to be calculated from a point outside the displayed screen or window, the line must be clipped. From figure 3 it will be seen that the line 302 starts at a point 304 which is outside the window 306. A portion of the line 302, must be displayed in the window while the remaining portion must be hidden. In order to accomplish this, two methods are conventionally used.

One method of clipping is to calculate the non clipped sublines starting point and to perform a Bresenham type interpolation. In this case, the interpolation will start at a point other than the line's real origin and the subset line problem will be encountered. This could result in slightly different pixels being included in the clipped line than would have been drawn in the original line. If it is required to retrace the unclipped line, or the line clipped by a different window, the programmer is likely to find that a slightly different set of pixels are selected.

A second conventional method circumvents the subset line problem by performing a Bresenham type interpolation from the start point of the line, keeping track of where the window starts, and not performing a 'write' in the non windowed area. This method is accurate but requires extra software overhead, and therefore computational time, to ensure that the line is not written into the non-windowed area. It also costs time by performing the full DDA, even for invisible pixels.

Clipping and interpolation techniques, including Bresenham's Algorithm, DDAs and Gouraud shading, are described in the book Principals of Interactive Computer Graphics (second edition), by William M. Newman and Robert F. Sproull, McGraw Hill (10th printing 1984).

vi) The Programmer's Dilemma

The programmer has been traditionally confronted with a dilemma. The programmer must typically choose between simple DDA type methods, which require costly divisions, and Bresenham's Algorithm together with similar techniques which limit the size of each X and Y increment to unity and produce subset line problems. It would be desirable to have an interpolation method that could be used to interpolate any range of values over any number of steps. It would be desirable to be able to perform Gouraud shading operations in hardware, using DDA type methods, over any range of values or number of steps. It would be desirable to be able to increment the interpolated values by a number greater than one in each step. It would also be desirable to avoid software divisions. Further it would be highly desirable to be able to perform line clipping in both a fast and accurate fashion which ensures the exact repeatability of selected pixels for a line clipped against different clipping boundaries.

II. Summary of the Invention

The present invention includes a method of performing digital differential analysis using a hardware multiplier accumulator (MAC). The method enables the programmer to have the best of the linear interpolation worlds. The MAC hardware allows DDA's to be performed quickly without the divisions inherent in simple DDA's, without the subset line problems associated with Bresenham's Algorithm and without requiring added code often required to handle cases where the number of incremental steps is smaller than the range of values over which the steps are to occur.

By performing DDA's using MAC hardware, many problems usually associated with linear interpolation are eliminated. For example, in one embodiment, line clipping can be accomplished easily and accurately. By properly initializing the MAC, lines of any pitch may be quickly clipped to the border of a window. By adding a hardware lookup table at one of the MAC inputs, the system eliminates the need to divide operations and thus the requirement for Bresenham type algorithms. The present system and method thus eliminate the long unsolved problem of the subset line.

Additionally, the present method can be used to interpolate any range of values or any number of steps. The relative sizes of N and DELTA V values do not effect the method whatsoever. This feature eliminates the need for extra code and allows DDA's to be performed to solve one dimensional problem where the range of values is greater than the number of steps over which the interpolation is to occur.

In one embodiment, the present method is used for Gouraud shading of a line. One of the MAC inputs is loaded with delta colour (the amount the colour is to change along the line) and the other with the reciprocal of the line length. The high part (MSP) of the MAC result register is preloaded with the start colour. By using a ROM lookup table, the reciprocal of the line length does not have to be calculated by the program. The program simply holds the actual line length at the input of the lookup table and its reciprocal is automatically generated, without the need for any software calculations. Each time a pixel is to be drawn the two MAC inputs are multiplied and added to the previous result. The high part of the result is used as the colour for each pixel and is automatically changed when the accumulated low part of the result causes an overflow. With this method, the amount of change for each pixel is delta colour divided by the line length, therefore the final colour is start colour plus delta colour.

Advantageously, the method makes use of simple MAC hardware, already available on many bit slice processors and microprocessor based CPU's. MAC integrated circuits may also be added at low cost, to systems not already utilizing them. One embodiment of the present method uses a ROM lookup table to automatically perform reciprocal operations as data is presented for processing by the MAC. The use of a lookup table eliminates the need to perform time costly divide operations and reduces CPU overhead. The method thereby eliminates the conventional need to avoid certain algorithms using divide operations.

Another aspect of the invention provides a a method of clipping a line having two directional components and a given length, so as to display only a predetermined segment of the line comprising the steps of: initializing any of a multiplier accumulator's output registers with a predetermined initial value; loading a first input register of a multiplier accumulator with a value equal to the length one directional component of the line; loading a second input register of the multiplier accumulator with a value equal to the reciprocal of the length of other directional component of the line; causing the multiplier accumulator to multiply the values in its first and second input registers; accumulating the fractional part of the result of the multiply in a first output register while accumulating the overflow of the first output register in a second output register; further accumulating the integer part of the result of the multiply in the second output register; and, drawing a point on a display device whenever the value in the second output changes, the pixel having at least one coordinate value determined according to the value stored in the second output register.

The present method can be utilized to solve a wide variety of interpolation problems and is available, in many cases, virtually cost free.

## III. Brief Description of the Drawings

Figure 1 is a diagram illustrating a typical line interpolation problem.
Figure 2 is a diagram illustrating the problem of interpolating a line of over 45 degrees from the X axis.
Figure 3 is a diagram illustrating the problems associated with clipping.
Figure 4 is a block diagram of a multiplier accumulator according to the present method.
Figure 5 is a block diagram of a multiplier accumulator and a lookup table memory according to a further embodiment of the present method.
Figure 6 is a flow chart of a DDA according to the present method.

## IV. Detailed Description of the Preferred Embodiments

The present invention includes a method of performing digital differential analysis using a hardware multiplier accumulator (MAC). The method enables the programmer to handle cases where the number of incremental steps is smaller than the range of values over which the steps are to occur. The method also solves several of the problems inherent in clipping methods using Bresenham's algorithm and other conventional DDA techniques.

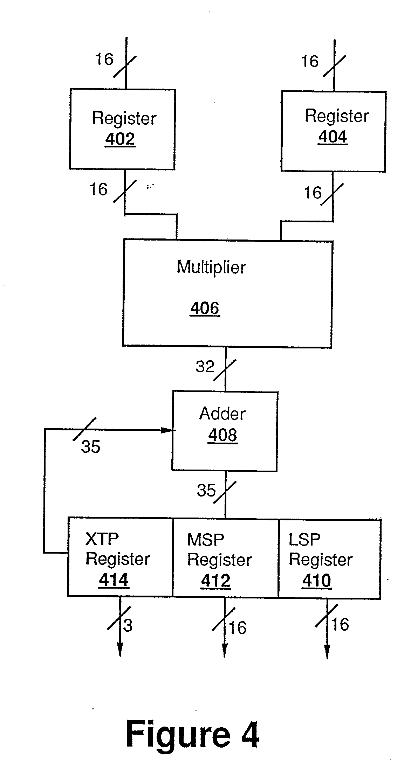

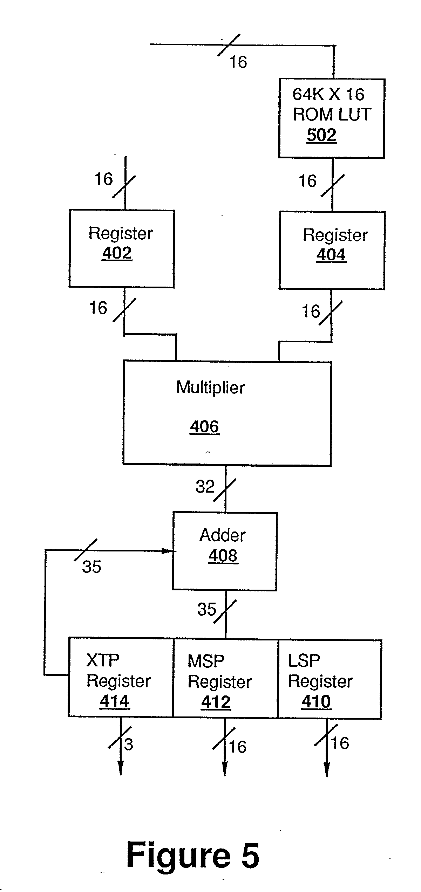

The basic hardware utilized by the preferred embodiment of the present method is shown in figures 4 and 5. Figure 4 is a block diagram of a multiplier accumulator (MAC). The MAC 400 includes two input registers 402,404, a multiplier array 406, an adder 408, and three output registers 410, 412, 414. The LSP (least significant product) register is used to hold and accumulate the fractional portion of the result of the multiply operation, the MSP (most significant product) register is used to hold and accumulate the integer portion of the result, and the XTP (extended product) register is used to hold and accumulate any overflow.

The MAC 400 is preferably of a type with the ability to preload any of the output registers 410,412,414 and is operable in at least multiply and multiply-accumulate modes. The preferred multiplier accumulator (MAC) is an IDT7210 16 X 16 Parallel Multiplier-Accumulator, available from Integrated Device Technology, Inc. of Santa Clara, California. The structure and operation of the IDT7210 is described in the Integrated Device Technology, Inc. - HIGH PERFORMANCE CMOS DATA HANDBOOK available from Integrated Device Technology, Inc. of Santa Clara, California. The Integrated Device Technology, Inc. - HIGH PERFORMANCE CMOS DATA HANDBOOK is in its entirety, incorporated by reference herein as if printed in full below.

Figure 5 shows an alternate embodiment of the hardware used by the present method which includes a 64K X 16 Read Only Memory (ROM) lookup table 502. The lookup table 502 is used to generate reciprocals of any value that appears at its address inputs.

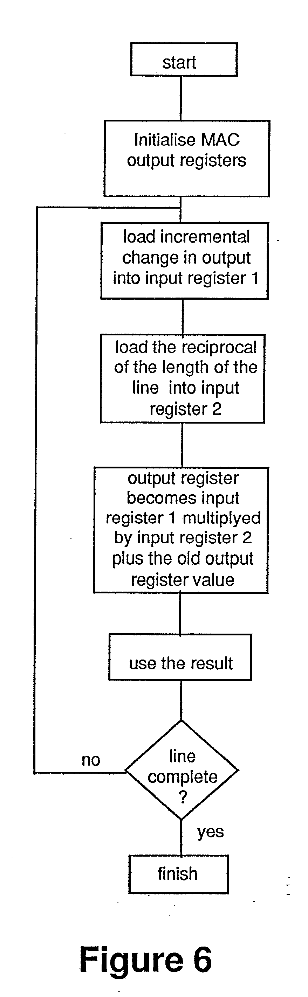

Referring to Fig. 6, in operation, the output registers of the MAC are initially preloaded. The case of generating a line will first be considered. The LSP register is first loaded with an initial rounding value (eg 0.5). The starting value V for one coordinate (e.g. the Y) is initially loaded into MSP. The MAC should be set in 'multiply-accumulate' mode as the input is loaded.

Next, the value of DELTA V is held at the address inputs of the first input register 402. Simultaneously, the value of N is held at the address inputs of the ROM lookup table 502 until the value of 1/N appears and is stable at the first input register 402. When both values appear and are stable at input registers 402, 404, they can be clocked into the first and second input registers 402 and 404 respectively. Alternatively, the DELTA V value can be clocked into the first input register as soon as it is stable at the MAC inputs and the reciprocal of the N value can be clocked into the second input register when it is stable. The stability of the data at the MAC inputs is easily ensured by the use of a suitable clocking scheme which takes into account the ROM access time.

Due to the fact that it has been set up in multiply-accumulate mode, the MAC will multiply 1/N by the DELTA V. This result will then be added to the initial contents of the output registers 410,412,414. The accumulated

5

value is then clocked into the output registers 410,412,414. Next, the result of the multiplication is then reclocked and accumulated with the outut register values. The process continues iteratively for the total number of steps over which the interpolation is to occur. This merely requires clocking the MACs output registers 410,412,414 a total number of times equal to the number of steps over which the DELTA V value change is to occur.

In order to correctly plot the X and Y values, X is incremented by 1 for every clock cycle while Y plotted at the value is in the MSP register 412 at each clock cycle. Where Y has an initial value other than zero, the MSP register 412 may be preloaded with that value (Y0) during initialization. The ability to load an initial Y value has great significance in line clipping procedures.

In cases where line clipping is to be performed, the MAC is programmed similar to line generation. Essentially the initialization is identical, except that on the initial multiply/accumulate operation the first input register 402 is loaded with the number of steps n to reach the visible portion of the line (i.e. n * DELTA V). The first multiply/accumulate then sets up the output registers exactly as if n steps had been taken to achieve this setting (i.e. the result will be n * DELTA V/ N), including the 16 bit fractional error term. The first point can then be plotted. Next, the first input register is loaded with DELTA V as it would have been in the standard line drawing routine. The algorithm now proceeds normally until the end of the line, or until the line crosses out of the window. The MAC is used for the initial calculation of n * DELTA V.

In the preferred embodiment of the present method, N and DELTA V are expressed as 16 bit binary values. The ROM lookup table 502 is programmed with the reciprocal of each address within each address location, preferably in unsigned fractional notation. In other words, address 2 should contain hexadecimal 8000, address 4 should contain 4000 etc.. Addresses one and zero are special cases. The MAC programming algorithm (Figure 5) should trap out on cases where N is zero. A MAC operation is not needed where only one point is to be plotted as this can be handled comfortably by the software.

Advantageously, negative slope values are not required. In Gouraud shading the DDA can always start from the numerically lower shade and work up. In the case of drawing a line the DDA can always progress from which ever endpoint will result in a positive slope. Once programmed, the output of the lookup table ROM will naturally produce the reciprocal of the N value held at its address inputs.

Advantageously, each input to the MAC is on a separate bus, and therefore both inputs can be loaded together or separately. Also, the output registers can be clocked independently of the input registers, so that the input registers need only be clocked once to draw or shade a line and twice to clip to a given area.

VI. Conclusion

Many improvements will now occur to those skilled in the art. For example, larger (i.e. more than 16 bit) MACs could be used to improve accuracy. Multiplexers could also be placed on the output to select which part of the output register is used. This would allow different mixes of integer and fraction sizes for different applications

The system and method could also be modified to use an adder only in the inner calculation loop with a multiplier to calculate N * DELTA V once at the beginning of the algorithm. This would be particularly useful if a high degree of accuracy required

The method could also be easily modified using the same hardware in order to move a set number of steps along the DDA. This would be particularly useful for parallel processors, which have more than one processor calculating shading for pixels along a line. For example, if a graphics system has five processors in the X direction (each looking after one pixel in a group of five), it is required to calculate 5 shading values in one step. The present system and method would make this easy providing that each processor's MAC is set up to step five steps every cycle.

Therefore, while the preferred embodiments have been described they should not be taken as limitations on the invention but only as exemplary therof.

**Claims**

1. A method of producing a series of quantised data values interpolated between a pair of end values, comprising the steps of:
   a) loading a first input register of a multiplier accumulator with a value representing the difference between the two end values;
   b) loading a second input register of the multiplier accumulator with the reciprocal of a value representing the number of interpolation steps between the end values;
   c) causing the multiplier accumulator to multiply the values in the first and second input registers to form a product;
   d) accumulating a lower significance part of the product in a first output register;
   e) accumulating the remaining higher significance part of the product and overflow of the first output register in a second output register; f) utilising the content of the second output register in producing one of the quantised data values; and
   g) repeating steps c) to f).

2. A method as claimed in claim 1, further comprising a preliminary step of loading the second output register with a predetermined value representing one of the end values.

3. A method as claimed in claim 1 or 2, further comprising a preliminary step of loading the first output register with a value equal to half of the overflow value of the first output register.

4. A method as claimed in any preceding claim, further comprising the preliminary steps of loading the first input register with an initial value, then performing steps b) to f), and then performing steps a) and c) to g) as aforesaid whereby clipping of the interpolation operation is achieved.

5) A method as claimed in any preceding claim, wherein step b) comprises the step of determining the reciprocal using a look-up table which is addressed by said value representing the number of interpolation steps and which provides the reciprocal of that value.

6. A method as claimed in claim 5, wherein the reciprocal value from the look-up table is loaded directly into the second input register.

7. A method as claimed in any preceding claim, for producing an interpolated line, wherein pixels or patches of an image are set at positions in accordance with the contents of the second output register.

8. A method as claimed in any of claims 1 to 6, for producing interpolated shading or colouring of an image, wherein pixels or patches of an image are set with densities or colours in accordance with the contents of the second output register.

9. An apparatus for producing a series of quantised data values interpolated between a pair of end values, comprising:
a first input register arranged to receive a first value;
a reciprocal look-up table arranged to be addressed by a second value;
a second input register arranged to receive a reciprocal value from the look-up table;
an output register; and
a multiplier accumulator arranged repeatedly to multiply the values of the first and second input registers and to accumulate the products in the output register.

10. An apparatus as claimed in claim 9 operated in accordance with the method of claim 5 or 6.

**Figure 1**

Figure 2

Figure 3

EP 0 334 600 A2

**Figure 4**

Figure 5

```
                    ┌──────────────┐
                    │    start     │
                    └──────┬───────┘
                           │
                    ┌──────┴───────┐
                    │ Initialise MAC│
                    │output registers│
                    └──────┬───────┘
         ┌─────────────────┤
         │          ┌──────┴───────┐
         │          │load incremental│
         │          │change in output│
         │          │into input register 1│
         │          └──────┬───────┘
         │                 │
         │          ┌──────┴───────┐
         │          │load the reciprocal│
         │          │of the length of the│
         │          │line into input│
         │          │register 2    │
         │          └──────┬───────┘
         │                 │
         │          ┌──────┴───────┐
         │          │output register│
         │          │becomes input │
         │          │register 1 multiplyed│
         │          │by input register 2│
         │          │plus the old output│
         │          │register value│
         │          └──────┬───────┘
         │                 │
         │          ┌──────┴───────┐
         │          │ use the result│
         │          └──────┬───────┘
         │                 │
         │              ◇  │
         │        no  ╱ line ╲
         └───────────╱complete╲
                     ╲    ?   ╱
                      ╲      ╱
                         │ yes
                    ┌────┴─────┐
                    │  finish  │
                    └──────────┘
```

# Figure 6